# EUROPEAN PATENT APPLICATION

(11) **EP 2 541 016 A1**
(43) Date of publication of application: **02.01.2013**
(21) Application number: 10776069.6
(22) Date of filing: 24.02.2010
(51) Int. Cl.: F02B 37/18, F15B 7/00, F15B 15/10

(54) **INTERNAL COMBUSTION ENGINE CONTROL DEVICE**

(71) Applicant: Toyota Jidosha Kabushiki Kaisha, Toyota-shi, Aichi 471-8571 (JP)
(72) Inventor: EIRAKU, Akira, Toyota-shi Aichi 471-8571 (JP)
(74) Representative: Kuhnen & Wacker
(86) International application number: PCT/JP2010/052866
(87) International publication number: WO 2011/104831

(57) **Abstract**

An object of this invention is to prevent a diaphragm of an actuator from being damaged by a high temperature, and improve a heat resistance property of the actuator. A valve actuator 30 includes a communication hole 76 that allows communication between a high pressure chamber 64 and a low pressure chamber 66 that are separated by a diaphragm 62, and a normally closed reed valve 78 that opens and closes the communication hole 76. When a temperature t of the valve actuator 30 is less than a pressure release temperature T1, an ECU 50 changes a differential pressure between the high pressure chamber 64 and low pressure chamber 66 by means of a pressure regulating valve 86, to control the valve actuator 30. This control is executed within a range of differential pressures at which the reed valve 78 does not open. If the temperature t exceeds the pressure release temperature T1, a differential pressure at which the reed valve 78 opens is realized by the pressure regulating valve 86. Thus, pressure is released from the high pressure chamber 64 to the low pressure chamber 66 at a high temperature, and the diaphragm 62 can be protected.

## Description

### Technical Field

The present invention relates to an internal combustion engine control apparatus, and particularly to an internal combustion engine control apparatus equipped with a diaphragm-type actuator.

### Background Art

The conventional technology for internal combustion engine control apparatuses includes an internal combustion engine control apparatus that has a variable capacity mechanism provided on a turbine side of a variable capacity turbocharger, and a diaphragm-type actuator that drives the variable capacity mechanism, for example, as disclosed in Patent Literature 1 (Japanese Patent Laid-Open No. 11-36877). The known conventional technology also includes an internal combustion engine control apparatus that is equipped with a waste gate valve that adjusts a boost pressure of an internal combustion engine, and an actuator that drives the waste gate valve, as disclosed in Patent Literature 2 (Japanese Patent Laid-Open No. 2006-274833).

### Citation List

### Patent Literature

Patent Literature 1: Japanese Patent Laid-Open No. 11-36877
Patent Literature 2: Japanese Patent Laid-Open No. 2006-274833

### Summary of Invention

### Technical Problem

The above-described conventional technology employs a configuration that uses a diaphragm-type actuator. However, since heat generated in an internal combustion engine is liable to be transmitted to a pressure chamber of the actuator, for example, in a case where high-load operations continue for a long time, there is the risk that the gas inside the pressure chamber will be thermally expanded and the internal pressure will rise and cause damage to the diaphragm. In particular, since the actuator that drives the waste gate valve is arranged in the vicinity of an exhaust system (turbine and the like) which becomes a high temperature, the above-described problem is liable to occur.

The present invention has been made to solve the above-described problem, and an object of the present invention is to provide an internal combustion engine control apparatus that is capable of preventing damage to a diaphragm caused by a high temperature and improving the heat resistance property of the actuator.

### Means for Solving the Problem

A first aspect of the present invention is an internal combustion engine control apparatus, comprising:
a movable mechanism provided in an internal combustion engine;
a diaphragm-type actuator in which, by disposing a flexible diaphragm inside a housing, a pressure chamber is defined on at least one side of the diaphragm, wherein the actuator drives the movable mechanism by allowing the diaphragm to bend and deform in accordance with a differential pressure that is generated between one side and another side of the diaphragm;
differential pressure generating means capable of generating the differential pressure;
actuator control means that controls an operating state of the actuator by changing the differential pressure by means of the differential pressure generating means based on operating information of the internal combustion engine;
temperature acquiring means that acquires a temperature of the actuator; and
pressure release means that releases a pressure of the pressure chamber when a temperature of the actuator exceeds a predetermined pressure release temperature.

In a second aspect of the present invention, the actuator comprises a high pressure chamber and a low pressure chamber that are defined as the pressure chamber on one side and another side of the diaphragm, respectively; and
the pressure release means is configured to release pressure from either one of the high pressure chamber and the low pressure chamber to the other of the high pressure chamber and the low pressure chamber.

In a third aspect of the present invention, the internal combustion engine control apparatus comprising:
a communication portion that allows the high pressure chamber and the low pressure chamber to communicate with each other; and
a pressure release valve that is a normally-closed valve that opens and closes the communication portion, and that opens when a state of the differential pressure satisfies a predetermined valve opening condition;
wherein the pressure release means is configured so that, when a temperature of the actuator exceeds the pressure release temperature, the valve opening condition is realized by means of the differential pressure generating means and the pressure release valve is opened.

In a fourth aspect of the present invention, the pressure release valve comprises a reed valve that is provided at a position that covers the communication portion from the low pressure chamber side, and that opens when a differential pressure in a forward direction that presses the diaphragm from the high pressure chamber side becomes equal to or greater than a predetermined valve opening pressure;
when activating the actuator, the actuator control means maintains a pressure value of the differential pressure in a forward direction at a value that is less than the valve opening pressure while generating the differential pressure; and
the pressure release means is configured to increase the differential pressure in a forward direction to a pressure that is greater than or equal to the valve opening pressure.

In a fifth aspect of the present invention, the pressure release valve comprises a reed valve that is provided at a position that covers the communication portion from the high pressure chamber side, and that opens when a differential pressure in a backward direction that presses the diaphragm from the low pressure chamber side is generated;
when activating the actuator, the actuator control means causes a differential pressure in a forward direction to be generated that presses the diaphragm from the high pressure chamber side; and
the pressure release means is configured to generate the differential pressure in a backward direction.

In a sixth aspect of the present invention, the differential pressure generating means comprises:
two pressure sources that supply pressure to the high pressure chamber and the low pressure chamber, respectively; and
a pressure regulating valve that regulates a pressure that is supplied to at least one of the high pressure chamber and the low pressure chamber.

In a seventh aspect of the present invention, the internal combustion engine control apparatus further comprising drive time release inhibiting means that inhibits operation of the pressure release means when a vehicle is moving.

In an eighth aspect of the present invention, the internal combustion engine control apparatus further comprising acceleration time release inhibiting means that inhibits operation of the pressure release means at a time of acceleration of the internal combustion engine.

In a ninth aspect of the present invention, the temperature acquiring means is configured to estimate a temperature of the actuator based on
operating information of the internal combustion engine.

In a tenth aspect of the present invention, the internal combustion engine control apparatus further comprising:
a supercharger that supercharges intake air utilizing an exhaust pressure;
wherein the movable mechanism is a waste gate valve that adjusts a boost pressure produced by the supercharger.

### Advantageous effects of Invention

According to the first invention, when the actuator enters an excessively high temperature state, pressure can be released from the pressure chamber by pressure release means. It is therefore possible to prevent a gas inside the pressure chamber from thermally expanding and causing damage to the diaphragm, and also to improve the heat resistance property of the actuator.

According to the second invention, when the actuator has entered an excessively high temperature state, pressure can be released between the high pressure chamber and the low pressure chamber by the pressure release means. According to this configuration, a mechanism for pressure release can be housed inside a housing that is shut off from the outside. Consequently, since it is not necessary to provide a vent hole or the like that opens to outside as in the case of a structure in which, for example, pressure is allowed to escape to outside of the housing, foreign matter such as dust and moisture can be reliably prevented from entering into the housing from outside. Accordingly, even when a mechanism for pressure release is mounted thereto, an actuator with high reliability can be realized.

According to the third invention, when the actuator has entered an excessively high temperature state, the pressure release means can easily realize a valve opening condition of a pressure release valve by changing a direction or a pressure value of a differential pressure by means of differential pressure generating means. It is thus possible to open the pressure release valve and release the pressure from the high pressure chamber towards the low pressure chamber through a communication portion.

According to the fourth invention, by using a reed valve that has a simple structure, the communication portion can be easily opened or closed by merely changing the direction of a differential pressure or a pressure value. It is thereby possible to easily realize a mechanism for pressure release without mounting a complex valve apparatus or valve control mechanism or the like in the actuator. Accordingly, the overall actuator can be made with a small size and a light weight, and assembly thereof can be performed efficiently.

According to the fifth invention, the same operational advantages as the fourth invention can be obtained by using a reed valve. Further, since the reed valve has a structure that covers the communication portion from the high pressure chamber side, in a case where the pressure of the low pressure chamber is high when the diaphragm bends and deforms, the diaphragm can be caused to deform while opening the reed valve and releasing the pressure of the low pressure chamber. Thus, the actuator can be operated at a high speed while protecting the diaphragm.

According to the sixth invention, different pressures can be supplied to the high pressure chamber and the low pressure chamber, respectively, by two pressure sources, and a differential pressure can be efficiently generated between the two chambers. Further, the direction and pressure value of the differential pressure can be accurately controlled by a pressure regulating valve.

According to the seventh invention, drive time release inhibiting means can inhibit operation of the pressure release means when the vehicle is being driven. Therefore, since the pressure release means need not be operated when an actuator cooling effect is obtained by means of a traveling wind, the operating frequency of the pressure release means that is an emergency means can be decreased as much as possible.

According to the eighth invention, acceleration time release inhibiting means can inhibit operation of the pressure release means at the time of accelerating operation of the internal combustion engine, and thus drivability can be favorably maintained.

According to the ninth invention, temperature acquiring means can estimate the temperature of the actuator based on operating information of the internal combustion engine. Consequently, since it is not necessary to use a dedicated temperature sensor or the like for the actuator, the system can be simplified and costs can be reduced.

According to the tenth invention, by using an actuator which can release pressure at the time of a high temperature even when driving a waste gate valve in the vicinity of an exhaust system that becomes a high temperature, the waste gate valve can be stably driven.

### Brief Description of Drawings

[Figure 1] Figure 1 is an overall configuration diagram for describing the system configuration of Embodiment 1 of the present invention.
[Figure 2] Figure 2 is a vertical cross-sectional view that illustrates the structure of a valve actuator.
[Figure 3] Figure 3 is an enlarged view of a principal portion in Figure 2 that illustrates the vicinity of a reed valve in an enlarged manner.
[Figure 4] Figure 4 is a characteristics diagram that illustrates the opening characteristics of the reed valve.
[Figure 5] Figure 5 is a flowchart that illustrates control executed by an ECU according to Embodiment 1 of the present invention.
[Figure 6] Figure 6 is an overall configuration diagram for describing the system configuration of Embodiment 2 of the present invention.
[Figure 7] Figure 7 is a vertical cross-sectional view that illustrates the structure of a valve actuator.
[Figure 8] Figure 8 is an enlarged view of a principal portion in Figure 7 that illustrates the vicinity of a reed valve in an enlarged manner.
[Figure 9] Figure 9 is a characteristics diagram that illustrates the opening characteristics of the reed valve.
[Figure 10] Figure 10 is a flowchart that illustrates control executed by an ECU according to Embodiment 2 of the present invention.

### Best Mode for Carrying Out the Invention

### Embodiment 1

### [Configuration of Embodiment 1]

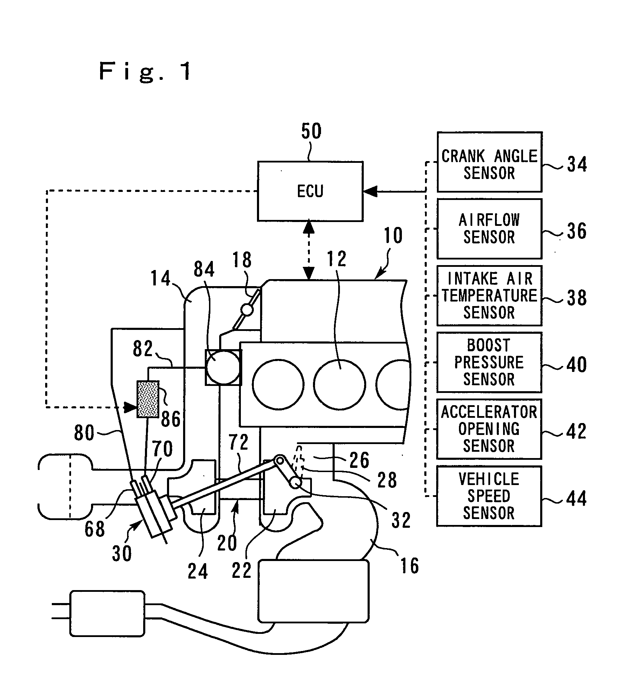

Embodiment 1 of the present invention is described hereunder while referring to Figure 1 to Figure 5. Figure 1 is an overall configuration view for describing the system configuration of Embodiment 1 of the present invention. The system of the present embodiment includes an engine 10 as an internal combustion engine. Each cylinder 12 of the engine 10 is provided with a fuel injection valve, a spark plug, an intake valve, an exhaust valve and the like. The engine 10 also includes an air intake passage 14 that draws intake air into each cylinder 12 and an exhaust passage 16 that discharges exhaust gas from inside each cylinder. A throttle valve 18 that regulates the intake air amount is provided in the air intake passage 14.

The engine 10 also includes a supercharger 20 that supercharges intake air utilizing the exhaust pressure. The supercharger 20 includes a turbine 22 that is provided in the exhaust passage 16 and a compressor 24 that is provided in the air intake passage 14. When the supercharger 20 is operating, the turbine 22 receives the exhaust pressure and rotates to drive the compressor 24. As a result, the compressor 24 compresses and supercharges the intake air. The engine 10 also includes a bypass passage 26 that is provided in the exhaust passage 16 so as to bypass the turbine 22, and a waste gate valve (WGV) 28 that regulates the amount of exhaust gas flowing through the bypass passage 26. The WGV 28 is driven via a link mechanism 32 by a valve actuator 30, and constitutes a movable mechanism of the present embodiment. Further, pressure pipes 80 and 82, a negative pressure pump 84, and a pressure regulating valve 86 and the like that are described later are mounted as a drive system of the valve actuator 30 in the engine 10.

The system of the present embodiment is equipped with a sensor system that includes sensors 34 to 44 described below, and an ECU (Electronic Control Unit) 50 that controls the operational state of the engine 10. The sensor system will be described first. A crank angle sensor 34 outputs a signal that is synchronized with rotation of the crankshaft of the engine 10. The ECU 50 can detect the number of engine rotations and the crank angle based on the signal output from the crank angle sensor 34. An airflow sensor 36 detects the intake air amount, and an intake air temperature sensor 38 detects the temperature of the intake air. A boost pressure sensor 40 detects the pressure (boost pressure) of intake air that has been supercharged by the supercharger 20. Further, an accelerator opening sensor 42 detects an operation amount of an accelerator pedal (accelerator opening) by the driver of the vehicle, and a vehicle speed sensor 44 detects the speed of the vehicle.

In addition to the aforementioned sensors 34 to 44, the sensor system includes various sensors required for control of the vehicle and engine (for example, a water temperature sensor that detects the temperature of engine cooling water, and an air-fuel ratio sensor that detects the exhaust air-fuel ratio). These sensors are connected to the input side of the ECU 50. Fuel injection valves, spark plugs, and various actuators that include the pressure regulating valve 86 as described later are connected to the output side of the ECU 50.

The ECU 50 detects operating information of the engine by means of the sensor system, and performs operational control by driving each actuator based on the detection results. More specifically, the ECU 50 detects the number of engine revolutions and the crank angle based on the output of the crank angle sensor 34, and detects the intake air amount using the airflow sensor 36. The ECU 50 also calculates the fuel injection amount based on the intake air amount and number of engine revolutions and the like, and after deciding the fuel injection timing and ignition timing and the like based on the crank angle, the ECU 50 drives the fuel injection valves and spark plugs. Based on the output of the boost pressure sensor 40 and the like, the ECU 50 controls the degree of opening of the WGV 28 by means of the pressure regulating valve 86, and executes boost pressure control that is described later. The ECU 50 is configured to execute pressure release control that is described later when the temperature of the valve actuator 30 exceeds an allowable range.

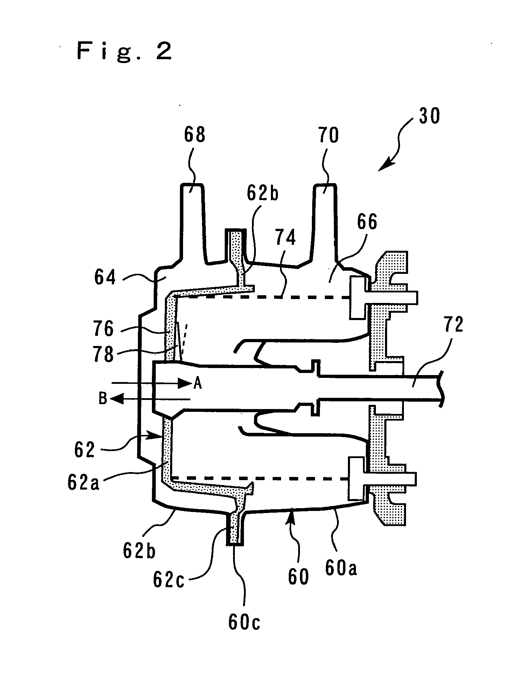

Next, the configuration of the valve actuator 30 is described. The valve actuator 30 is configured as a diaphragm-type actuator. More specifically, the valve actuator 30 is configured so that a diaphragm 62, described later, bends and deforms in accordance with a differential pressure that is generated between one side and another side of the diaphragm 62, and drives the WGV 28. Figure 2 is a vertical cross-sectional view that shows the configuration of the valve actuator. This view shows a cross-section of the valve actuator along the axis line of a drive rod 72 that is disposed in the center thereof.

As shown in Figure 2, the valve actuator 30 includes a housing 60, the diaphragm 62, the drive rod 72, and a return spring 74. The housing 60 is formed as a hollow case by a metallic material or the like, and is assembled by fitting a cap 60b to an opening portion of a housing main body 60a. An annular flange portion 60c that sandwiches and holds the diaphragm 62 is formed at the portion where the housing main body 60a and the cap 60b fit together.

The diaphragm 62 is formed from a flexible material such as rubber or resin, and is disposed inside the housing 60. The diaphragm 62 includes a bottomed cylindrical cup portion 62a arranged at a center part thereof, an annular thin-walled portion 62b that projects in a flange shape from the outer circumference of the cup portion 62a, and an annular fixed portion that is formed on the outer circumference of the thin-walled portion 62b. The cup portion 62a and the fixed portion 62c are formed as thick-walled portions that have a comparatively high rigidity. The fixed portion 62c is sandwiched and held by the flange portion 60c of the housing 60 across the entire circumference thereof. The thin-walled portion 62b has flexibility, and is formed as a region that can be bent and deformed.

The diaphragm 62 defines the inside of the housing 60 into a high pressure chamber 64 and a low pressure chamber 66. These two pressure chambers are disposed on one side and the other side of the diaphragm 62, and are each formed in an airtight manner. The housing 60 is provided with two connection ports 68 and 70 that connect the high pressure chamber 64 and low pressure chamber 66 to outside, respectively. When the valve actuator 30 is operating, the high pressure chamber 64 is maintained at a higher pressure than the low pressure chamber 66, and a differential pressure (hereunder, referred to as "differential pressure in the forward direction") in a direction that presses the diaphragm 62 towards the low pressure chamber 66 from the high pressure chamber 64 is generated between these pressure chambers. As a result, the diaphragm 62 bends and deforms towards the low pressure chamber 66 upon receiving the differential pressure in the forward direction, and is displaced in the axial direction together with the drive rod 72.

The drive rod 72 is formed, for example, in the shape of a stepped rod. The proximal end side thereof is fixed to the cup portion 62a of the diaphragm 62 inside the housing 60. The distal end side of the drive rod 72 protrudes to outside from the housing main body 60a, and is connected to the WGV 28 via the link mechanism 32 shown in Figure 1. The return spring 74 is composed by, for example, a coil spring, and is arranged in a compressed state inside the low pressure chamber 66. The return spring 74 constantly urges the cup portion 62a of the diaphragm 62 towards the high pressure chamber 64.

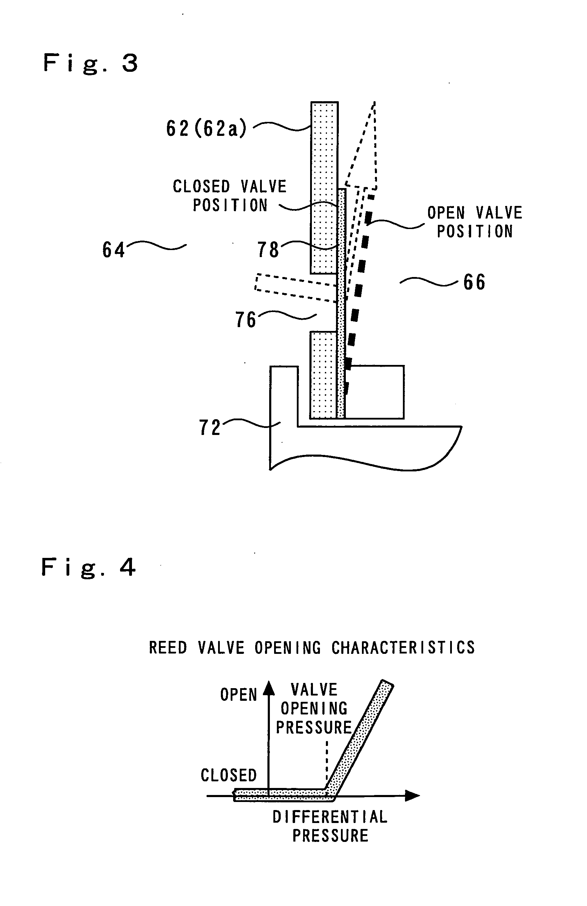

Next, the configuration of a vent hole 76 and a reed valve 78 and the like that are provided in the valve actuator 30 are described with reference to Figure 3 in addition to Figure 2. Figure 3 is an enlarged view of a principal portion in Figure 2, which illustrates the vicinity of the reed valve in an enlarged manner. As shown in Figure 3, a vent hole 76 that penetrates the bottom of the cup portion 62a is formed in the diaphragm 62. The vent hole 76 constitutes a communication portion that links the high pressure chamber 64 and the low pressure chamber 66. The normally closed reed valve 78 is provided at the bottom of the cup portion 62a at a position that covers the vent hole 76 from the low pressure chamber 66 side. The reed valve 78 constitutes a pressure release valve of the present embodiment.

The reed valve 78 is formed, for example, by a thin plate of metal or resin or the like that has elasticity (a spring property), and the proximal end side thereof is fixed to the bottom of the cup portion 62a. The distal end side of the reed valve 78 is retained in a closed valve position illustrated by the solid line in Figure 3 in a free state in which the reed valve 78 is not bent and deformed. In the closed valve position, the reed valve 78 blocks the vent hole 76 from the low pressure chamber 66 side, and hermetically blocks the communication portion between the high pressure chamber 64 and the low pressure chamber 66.

Figure 4 is a characteristics diagram that illustrates the opening characteristics of the reed valve. As shown in Figure 4, the reed valve 78 is retained in the above-described closed valve position when a differential pressure in the forward direction is less than a predetermined valve opening pressure. In this connection, a valve closing condition that is a condition in which a differential pressure in the forward direction is less than the valve opening pressure also includes a case in which a differential pressure in a direction that presses the diaphragm 62 towards the high pressure chamber 64 from the low pressure chamber 66 is generated (hereunder, referred to as "differential pressure in the backward direction"). In contrast, when the differential pressure in the forward direction rises to be greater than or equal to the aforementioned valve opening pressure and thereby satisfy a valve opening condition, the distal end side of the reed valve 78 receives the differential pressure and changes shape so as to bend backwards, and changes position to the open valve position indicated by the dashed line in Figure 3. As a result, the high pressure chamber 64 and the low pressure chamber 66 communicate through the vent hole 76.

Next, referring again to Figure 1, the pressure pipes 80 and 82, the negative pressure pump 84, and the pressure regulating valve 86 that are the drive system of the valve actuator 30 are described. First, the pressure pipe 80 on the high pressure side connects the high pressure chamber 64 (connection port 68) of the valve actuator 30 to the air intake passage 14. The connection position is set so as to be downstream of the compressor 24 and upstream of the throttle valve 18. Thus, intake air negative pressure of the engine 10 or a boost pressure (positive pressure) generated by the supercharger 20 is supplied to the high pressure chamber 64 through the pressure pipe 80. More specifically, the air intake passage 14 constitutes a pressure source that supplies pressure to the high pressure chamber 64.

In contrast, the pressure pipe 82 on the low pressure side connects the low pressure chamber 66 (connection port 70) of the valve actuator 30 to the negative pressure pump 84. The negative pressure pump 84, for example, is composed of a mechanical pump that is driven by the engine 10, and constitutes a pressure source that supplies pressure (negative pressure) to the low pressure chamber 66 through the pressure pipe 82. A pressure regulating valve 86 that regulates a negative pressure supplied to the low pressure chamber 66 from the negative pressure pump 84 is provided in the pressure pipe 82.

The pressure regulating valve 86 is composed, for example, of an electromagnetic drive-type three-way valve or the like. Based on a driving signal input from the ECU 50, some or all of negative pressure that is generated with the negative pressure pump 84 is released into the atmosphere. Accordingly, the pressure of the low pressure chamber 66 changes from a negative pressure generated by the negative pressure pump 84 to a pressure that is close to atmospheric pressure in accordance with the degree of opening of the pressure regulating valve 86. More specifically, when the pressure regulating valve 86 is fully opened, negative pressure generated with the negative pressure pump 84 is supplied as it is to the low pressure chamber 66. Further, when the pressure regulating valve 86 is fully closed, atmospheric pressure is supplied to the low pressure chamber 66. Thus, the pressure regulating valve 86 generates a differential pressure between the high pressure chamber 64 and the low pressure chamber 66, and also changes the direction and pressure value of the differential pressure. In this connection, the air intake passage 14, the negative pressure pump 84, and the pressure regulating valve 86 constitute differential pressure generating means of the present embodiment.

### (Boost Pressure Control)

Next, boost pressure control executed by the ECU 50 and operations of the valve actuator 30 in this control are described. In the boost pressure control, the pressure regulating valve 86 changes the differential pressure to control the operating state (that is, the degree of opening of the WGV 28) of the valve actuator 30 based on the output of the intake air temperature sensor 38 and the boost pressure sensor 40. The boost pressure can be appropriately controlled as a result.

More specifically, first, since it is not necessary to restrict the boost pressure when the temperature of the intake air or the boost pressure is sufficiently low, the valve actuator 30 is stopped and the WGV 28 is maintained in a closed state. When stopping the valve actuator 30, for example, the pressure regulating valve 86 is fully closed, the pressure of the low pressure chamber 66 is increased as far as a pressure in the vicinity of atmospheric pressure, and the differential pressure in the forward direction is decreased. Thus, a resultant force that combines the differential pressure and the spring force of the return spring 74 acts in the direction of arrow B in Figure 2 on the diaphragm 62. As a result, since the diaphragm 62 is maintained in a stopped position, the WGV 28 enters a closed state and normal supercharging operations are performed by the supercharger 20. Further, in this state, the differential pressure in the forward direction is maintained below the valve opening pressure of the reed valve 78 by the ECU 50. Accordingly, the reed valve 78 is retained in a closed state, and the high pressure chamber 64 and the low pressure chamber 66 are cut-off from each other.

Further, according to the boost pressure control, when the temperature of intake air or the boost pressure is high, the valve actuator 30 is activated and causes the WGV 28 to open. Thereby, the boost pressure is restricted, and the occurrence of knocking or an abnormal increase in the boost pressure can be prevented. When activating the valve actuator 30, the pressure regulating valve 86 is opened to a large degree to increase the negative pressure acting on the low pressure chamber 66 and generate (increase) a differential pressure in the forward direction. Thus, a resultant force that combines the differential pressure and the spring force of the return spring 74 acts in the direction of arrow A in Figure 2 on the diaphragm 62. As a result, mainly the thin-walled portion 62b bends and deforms so that the diaphragm 62 is displaced in the direction of arrow A in Figure 2 together with the drive rod 72. This displacement is transmitted to the WGV 28 via the link mechanism 32, and causes the WGV 28 to open. Thus, it is possible for a part of the exhaust gas to flow through the bypass passage 26, and the number of revolutions of the turbine 22 decreases and the boost pressure is restricted.

When actuating the valve actuator 30 in a normal state in which pressure release control is not being executed, the ECU 50 maintains the pressure value of the differential pressure at a value that is less than the valve opening pressure of the reed valve 78 while also causing the diaphragm 62 to bend and deform by means of a differential pressure in the forward direction. More specifically, the ECU 50 maintains the degree of opening of the pressure regulating valve 86 in a state in which the degree of opening is moderately reduced from a fully open state, and supplies a negative pressure (pressure close to atmospheric pressure) that is higher than the negative pressure generated at the negative pressure pump 84 to the low pressure chamber 66. Thus, the differential pressure in the forward direction can be regulated to a pressure that is less than the valve opening pressure of the reed valve 78, and the reed valve 78 can be maintained in a closed state.

In this connection, the operations of the valve actuator 30 that are described above (regarding the direction of action of a resultant force with respect to the diaphragm 62, and the behavior of the reed valve 78 and the like) can be implemented by, for example, appropriately setting the spring force of the return spring 74, the specifications of the pressure regulating valve 86, and the valve opening pressure of the reed valve 78 and the like. Furthermore, the above-described boost pressure control is merely one example that is illustrated according to the present embodiment, and the present invention is not limited thereto.

### (Pressure Release Control at High Temperature)

Next, pressure release control at the time of a high temperature that is executed by the ECU 50 as well as control of the valve actuator 30 during the control is described. When the valve actuator 30 (diaphragm 62) enters an excessively high temperature state, there is a risk that, for example, gas inside the high pressure chamber 64 will undergo thermal expansion and cause the internal pressure to rise, and as a result the diaphragm 62 will be damaged. Therefore, according to the pressure release control, when a temperature t of the valve actuator 30 exceeds a predetermined pressure release temperature T1, pressure is released to the low pressure chamber 66 from the high pressure chamber 64.

More specifically, when the temperature t of the valve actuator 30 exceeds the pressure release temperature T1, a valve opening condition of the reed valve 78 (that is, a state in which the differential pressure in the forward direction becomes equal to or greater than the valve opening pressure of the reed valve 78) is realized by the pressure regulating valve 86, and the reed valve 78 is caused to open. In this case, for example, the pressure regulating valve 86 is fully opened, negative pressure generated at the negative pressure pump 84 is supplied as it is to the low pressure chamber 66, and the differential pressure in the forward direction is increased to a pressure that is greater than or equal to the valve opening pressure. Thus, since the reed valve 78 opens, pressure can be released to the low pressure chamber 66 from the high pressure chamber 64 via the vent hole 76. In this connection, the pressure release temperature T1, for example, is set to the upper limit of a temperature at which the diaphragm 62 is not damaged by an increase in the pressure of the high pressure chamber 64, and is previously stored in the ECU 50.

In contrast, it is considered that even when the temperature t is a high temperature, since the valve actuator 30 is cooled by traveling wind when the vehicle is moving, the necessity to perform pressure release control is low. Therefore, according to the present embodiment a configuration is adopted that inhibits pressure release control when it is detected that the vehicle is moving based on the output of the vehicle speed sensor 44 (more specifically, when the vehicle speed is equal to or greater than a predetermined control inhibition speed V1). The control inhibition speed V1, for example, is previously set as a minimum speed at which a cooling effect is obtained by a traveling wind. According to this configuration, since it is not necessary to execute pressure release control when a cooling effect is obtained from a traveling wind, the execution frequency of pressure release control that is control in an emergency situation can be reduced as much as possible.

Further, since there are many cases in which the valve actuator 30 is actuated and boost pressure control is performed at the time of an acceleration operation, there is the risk that the boost pressure control may be hindered by executing pressure release control. Therefore, according to the present embodiment, a configuration is adopted that inhibits pressure release control when an acceleration demand is detected based on the output of the accelerator opening sensor 42 (more specifically, when the accelerator opening is greater than or equal to a predetermined control inhibition opening A1). The control inhibition opening A1 is, for example, previously set in correspondence with an acceleration level at which there is a high possibility that boost pressure control will be executed. According to this configuration, execution of pressure release control can be prevented at the time of an acceleration operation, and thus drivability can be favorably maintained.

According to the pressure release control, the temperature t of the valve actuator 30 is estimated based on the operating information of the engine 10. More specifically, for example, the output of the engine is calculated based on the intake air amount and number of engine revolutions and the like, and the temperature t is calculated by estimation based on the output. The data necessary for this estimation processing is determined by experiment and the like, and is previously stored in the ECU 50. Thus, even without using a temperature sensor or the like, the temperature t of the valve actuator 30 can be easily acquired, and simplification of the system and a reduction in costs can be achieved. A configuration may also be adopted in which a detection result for the intake air temperature, the history of the engine output, the vehicle speed, and the like are reflected in the calculation value for the temperature t. Thus, the temperature t can be accurately estimated even in a case where the outside air temperature changes or when the vehicle is stopped while the engine is at a high temperature (a so-called "dead soak").

### [Specific Processing for Implementing Embodiment 1]

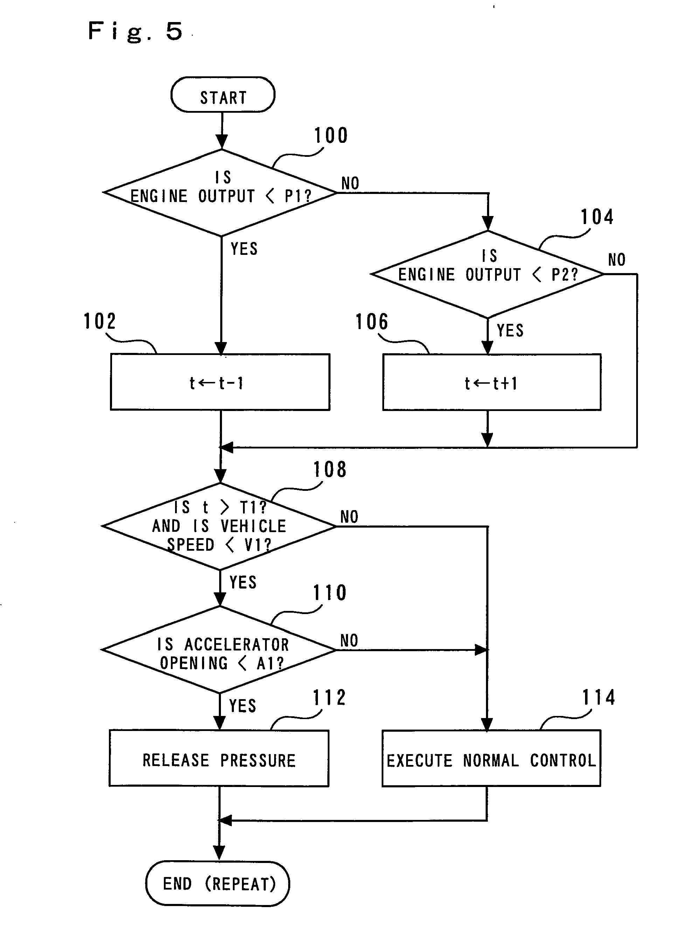

Figure 5 is a flowchart that illustrates control executed by the ECU according to Embodiment 1 of the present invention. The routine illustrated in Figure 5 is repeatedly executed during operation of the engine. According to this routine, first the temperature (estimated temperature) t of the valve actuator 30 is calculated utilizing the fact that the temperature of the actuator increases accompanying an increase in the engine output.

Specifically, first, the output of the engine is calculated based on the intake air amount and number of engine revolutions and the like, and it is determined whether or not the engine output is less than a predetermined low output determination value P1 (step 100). If the result determined in step 100 is "Yes", for example, the estimated temperature t is reduced by 1°C (step 102).
In contrast, if the result determined in step 100 is "No", the ECU determines whether or not the engine output is greater than a predetermined high output determination value P2 (step 104). If the result determined in step 104 is "Yes", for example, the estimated temperature t is increased by 1°C (step 106).

In this case, the low output determination value P1 and the high output determination value P2 are set as the minimum value and the maximum value of the engine output at which the actuator is maintained at a constant temperature, respectively, and are previously stored in the ECU 50. The temperature t of the valve actuator 30 can be estimated by the processing of steps 100 to 106. In this connection, this estimation processing is merely one example that is illustrated using the present routine, and the present invention is not limited thereto.

In the subsequent processing, the ECU determines whether or not the temperature t is greater than the aforementioned pressure release temperature T1, and whether or not the vehicle speed is less than the aforementioned control inhibition speed V1 (step 108). If the results determined in step 108 are both "Yes", the ECU determines whether or not the accelerator opening is less than the aforementioned control inhibition opening A1 (step 110). When these three determined results (steps 108 and 110) are all "Yes", the ECU executes the pressure release control and opens the reed valve 78 (step 112). If any of the aforementioned three results (steps 108 and 110) is "No", there is the possibility that the temperature of the valve actuator 30 has not risen to the extent that requires pressure release control, or that the vehicle speed is great enough to generate traveling wind, or that boost pressure control is performed at acceleration. Accordingly, in this case, the ECU does not execute the pressure release control, and executes control for normal time that includes the boost pressure control (step 114).

As described in detail above, according to the present embodiment, when the valve actuator 30 has become an excessively high temperature, the differential pressure in the forward direction is increased to a pressure that is greater than the valve opening pressure by the pressure regulating valve 86, so that the reed valve 78 can be opened. As a result, pressure can be released from the high pressure chamber 64 towards the low pressure chamber 66, and it is thus possible to prevent gas inside the high pressure chamber 64 from thermally expanding and damaging the diaphragm 62. Accordingly, the heat resistance property of the valve actuator 30 can be improved, and even when driving the WGV 28 in the vicinity of the exhaust system that becomes a high temperature, the valve actuator 30 can be stably operated.

Furthermore, according to the present embodiment, since a configuration is adopted that releases pressure between the high pressure chamber 64 and the low pressure chamber 66, the vent hole 76 and reed valve 78 and the like for pressure release can be housed inside the housing 60 that is blocked off from the outside. Hence, since it is not necessary to provide a vent hole or the like that opens to outside as in the case of a structure in which, for example, pressure is allowed to escape to outside of the housing, foreign matter such as dust and moisture can be reliably prevented from entering the housing 60 from outside. Accordingly, even when a mechanism for pressure release is mounted, an actuator with high reliability can be realized.

Since a configuration is adopted in which the vent hole 76 is provided in the diaphragm 62 and is opened and closed by the reed valve 78 with a simple structure, a mechanism for pressure release can be easily realized without mounting, for example, parts that form a passage for pressure release or a complex valve apparatus or the like in the valve actuator 30. In addition, since a valve control mechanism is also unnecessary, the reed valve 78 can be easily opened by merely changing the direction or pressure value of the differential pressure. Therefore, the overall actuator can have a small size and a light weight, and assembly thereof can be performed efficiently.

According to the present embodiment, the air intake passage 14 that is a first pressure source is connected to the high pressure chamber 64, the negative pressure pump 84 that is a second pressure source is connected to the low pressure chamber 66, and negative pressure is regulated by the pressure regulating valve 86. Therefore, different pressures can be supplied to the high pressure chamber 64 and the low pressure chamber 66, respectively, and a differential pressure can be efficiently generated between the high pressure chamber 64 and the low pressure chamber 66. Further, the direction and pressure value of the differential pressure can be accurately controlled by the pressure regulating valve 86.

According to Embodiment 1, steps 100 to 106 shown in Figure 5 illustrate a specific example of temperature acquiring means according to claims 1 and 9. Further, steps 108 and 112 illustrate a specific example of pressure release means according to claims 1 to 4, and step 114 illustrates a specific example of actuator control means according to claims 1 to 4. Furthermore, step 108 illustrates a specific example of drive time release inhibiting means according to claim 7, and step 110 illustrates a specific example of acceleration time release inhibiting means according to claim 8.

### Embodiment 2

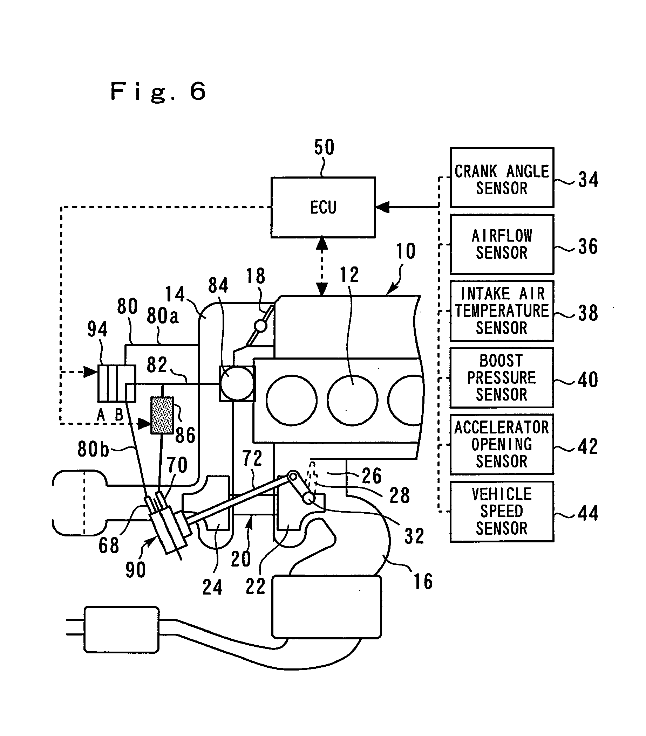

Next, Embodiment 2 of the present invention is described referring to Figure 6 to Figure 10. A feature of the present embodiment is that the structure of the reed valve and the drive system of the valve actuator are different to those employed in Embodiment 1. In this connection, according to the present embodiment the same reference numerals are used to designate components that are the same as in the above-described Embodiment 1, and a description of such components is omitted below.

### [Features of Embodiment 2]

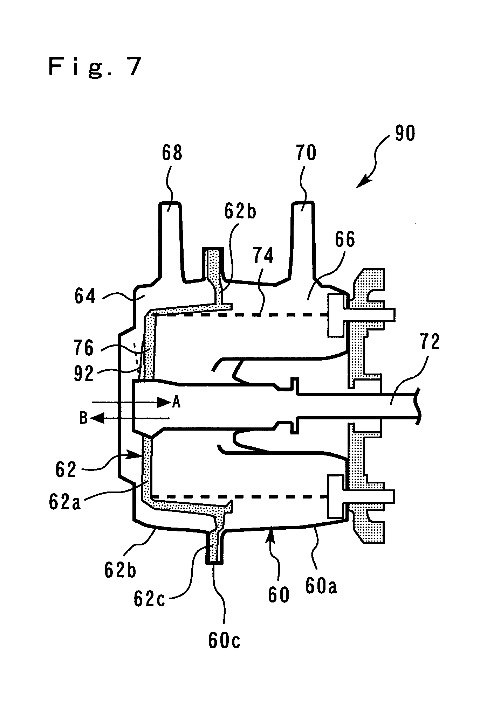

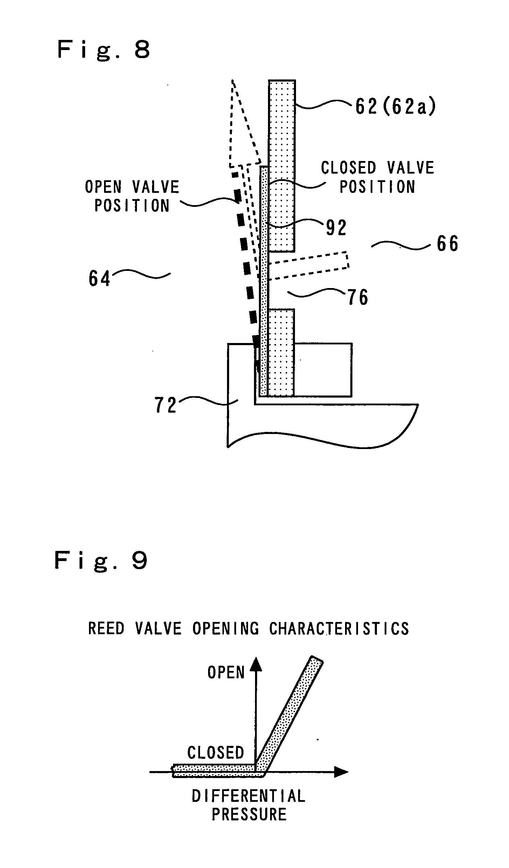

First, the structure of the valve actuator 90 will be described referring to Figure 7 to Figure 9. Figure 7 is a vertical cross-sectional view that illustrates the structure of the valve actuator. Figure 8 is an enlarged view of a principal portion in Figure 7 that illustrates the vicinity of a reed valve in an enlarged manner. Figure 9 is a characteristics diagram that illustrates the opening characteristics of the reed valve. As shown in Figure 7, similarly to Embodiment 1, a valve actuator 90 includes the housing 60, the diaphragm 62, the high pressure chamber 64, the low pressure chamber 66, the drive rod 72, the return spring 74, and the vent hole 76, and also includes a reed valve 92 that is a normally-closed type of pressure release valve.

However, as shown in Figure 7 and Figure 8, the reed valve 92 is provided at a position that covers the vent hole 76 from the high pressure chamber 64 side. When a differential pressure in the forward direction arises between the high pressure chamber 64 and the low pressure chamber 66, the reed valve 92 enters a free state and is retained in a closed valve position, and blocks the vent hole 76 from the high pressure chamber 64 side. Further, as shown in Figure 9, the reed valve 92 is configured so as to open when a differential pressure in the backward direction arises and the valve opening condition is satisfied, and thereby open the vent hole 76.

Figure 6 is an overall configuration diagram for describing the system configuration of Embodiment 2 of the present invention. As shown in Figure 6, the drive system of the valve actuator 90 is provided with an electromagnetic drive-type switching valve 94 that is controlled by the ECU 50. The switching valve 94 is constituted by, for example, a three-port, two-position switching valve that has two inflow ports and one outflow port, and is connected to a position partway along the pressure pipe 80. More specifically, one inflow port of the switching valve 94 is connected to the air intake passage 14 via an upstream portion 80a of the pressure pipe 80, and the other inflow port is connected to the negative pressure pump 84. Further, the downstream port of the switching valve 94 is connected to the connection port 68 of the valve actuator 90 via a downstream portion 80b of the pressure pipe 80.

Further, the switching valve 94 can be switched to either of positions A and B shown in Figure 6 in accordance with a control signal input from the ECU 50. Thus, the connection port 68 (high pressure chamber 64) of the valve actuator 90 is connected to the air intake passage 14 when the switching valve 94 is switched to position A, and is connected to the negative pressure pump 84 when the switching valve 94 is switched to position B. According to the present embodiment, the switching valve 94 constitutes another pressure regulating valve that is used in combination with the pressure regulating valve 86. Further, the air intake passage 14, the negative pressure pump 84, the pressure regulating valve 86, and the switching valve 94 constitute differential pressure generating means.

### (Boost Pressure Control)

Next, control of the valve actuator 90 that is performed when boost pressure control is executed is described. First, in a normal state in which the ECU 50 does not execute pressure release control, the switching valve 94 is switched to position A. Thus, the drive system of the actuator is set to the same state as in Embodiment 1. In this state, when stopping the valve actuator 90, similarly to Embodiment 1, for example, the pressure regulating valve 86 is fully opened to decrease the differential pressure in the forward direction, and the diaphragm 62 is retained at the stop position by a resultant force in the direction of arrow B shown in Figure 7. In contrast, when activating the valve actuator 90, similarly to Embodiment 1, the degree of opening of the pressure regulating valve 86 is increased to increase the differential pressure in the forward direction and thereby cause the diaphragm 62 to bend and deform due to a resultant force in the direction of arrow A. In each of the above-described cases, since a differential pressure in the forward direction arises between the high pressure chamber 64 and the low pressure chamber 66, the reed valve 92 is maintained in a closed state. Accordingly, similarly to Embodiment 1, the ECU 50 can execute boost pressure control.

### (Pressure Release Control at High Temperature)

Next, operations of the valve actuator 90 during pressure release control at the time of a high temperature are described. When the temperature t of the actuator exceeds the pressure release temperature T1, the ECU 50 switches the switching valve 94 to position B and sets the degree of opening of the pressure regulating valve 86 to a degree of opening that is at least not fully open (halfway open or a fully closed state). As a result, although a negative pressure of the negative pressure pump 84 is supplied as it is to the high pressure chamber 64, a pressure that is higher than the negative pressure of the pump is supplied to the low pressure chamber 66. Hence, a differential pressure in the backward direction arises between the two pressure chambers, and a valve opening condition is realized with respect to the reed valve 92. As a result, since the reed valve 92 opens, pressure can be released via the vent hole 76.

Accordingly, operational advantages that are approximately the same as in Embodiment 1 can also be obtained with the present embodiment configured in this manner. Further, since the pressure regulating valve 86 and the switching valve 94 are provided that correspond to two pressure sources constituted by the air intake passage 14 and the negative pressure pump 84, the direction and pressure value of a differential pressure can be controlled with greater efficiency.

Further, according to the present embodiment, since a configuration is adopted in which the reed valve 92 covers the vent hole 76 from the high pressure chamber 64 side, when actuating the diaphragm 62 it is possible to prevent the pressure in the low pressure chamber 66 from transiently increasing and damaging the thin-walled portion 62b of the diaphragm 62 or the like. More specifically, when the pressure in the high pressure chamber 64 is rapidly increased, in some cases an operation by the pressure regulating valve 86 that decreases the pressure in the low pressure chamber 66 does not occur quickly enough to counteract the rapid increase in pressure, and the diaphragm 62 is displaced towards the low pressure chamber 66 in a state in which the pressure in the low pressure chamber 66 is high. In this case, there is a risk that, upon receiving a high pressure from the low pressure chamber 66, the thin-walled portion 62b of the diaphragm 62 will be damaged as the result of changing shape so as to turn towards the high pressure chamber 64 side. However, when the speed of pressure increase in the high pressure chamber 64 is restricted to avoid such damage, the responsiveness of the valve actuator 90 or the WGV 28 decreases.

In contrast, according to the present embodiment, if the pressure of the low pressure chamber 66 is high when the diaphragm 62 bends and deforms, the reed valve 92 is opened by a differential pressure in the backward direction, and the pressure in the low pressure chamber 66 can be released to the high pressure chamber 64 side. More specifically, even when operating the valve actuator 90 at a high speed, the diaphragm 62 can be allowed to change shape while releasing pressure from the low pressure chamber 66, and the thin-walled portion 62b and the like can be protected from damage.

### [Specific Processing for Implementing Embodiment 2]

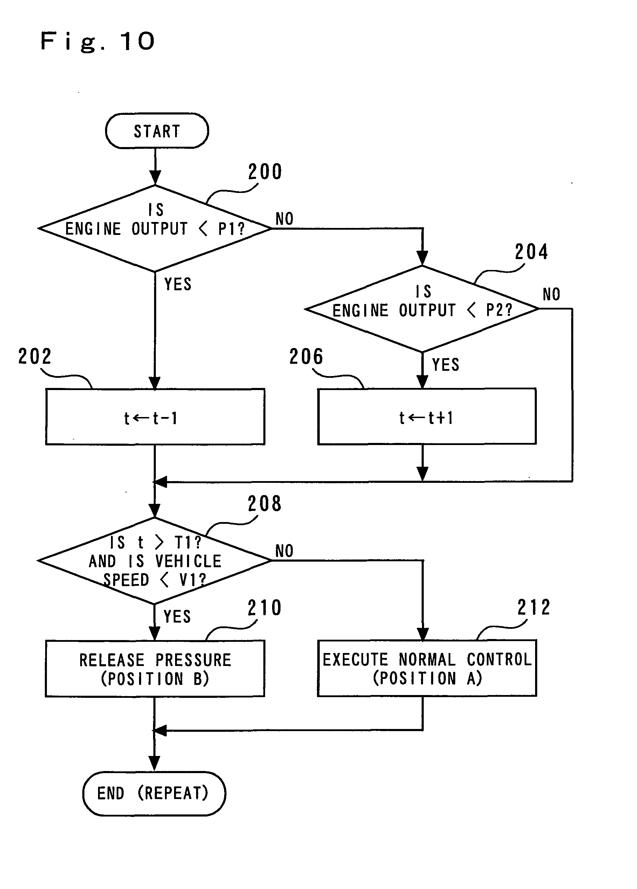

Figure 10 is a flowchart that illustrates control executed by the ECU according to Embodiment 2 of the present invention. The routine illustrated in Figure 10 is repeatedly executed during operation of the engine. According to this routine, processing is first performed to estimate the temperature t of the valve actuator 90 and determine the temperature and vehicle speed (steps 200 to 208) by performing similar processing as in steps 100 to 108 in Embodiment 1 (Figure 5).

When the result determined at step 208 is "Yes", the switching valve 94 is switched to position B and the aforementioned pressure release control is executed to open the reed valve 92 (step 210). Further, when the result determined at step 208 is "No", the switching valve 94 is switched to position A and normal control including boost pressure control is executed (step 212).

According to Embodiment 2, steps 200 to 206 in Figure 10 illustrate a specific example of temperature acquiring means according to claims 1 and 9. Further, steps 208 and 210 illustrate a specific example of pressure release means according to claims 1 to 3, and 5. Step 212 illustrates a specific example of actuator control means according to claims 1 and 5. Step 208 illustrates a specific example of drive time release inhibiting means according to claim 7.

The foregoing embodiments describe cases which take as examples the valve actuators 30 and 90 that have the high pressure chamber 64 and the low pressure chamber 66. However, the present invention is not limited thereto. For example, the present invention may also be applied to an actuator that has only one pressure chamber and which is configured to bend and deform a diaphragm by means of a differential pressure between the pressure inside the pressure chamber and an external atmospheric pressure.

Further, according to the embodiments, the vent hole 76 is provided in the diaphragm 62 as a communication portion at which the high pressure chamber 64 and the low pressure chamber 66 communicate. However, the present invention is not limited thereto and, for example, a communication portion may be composed by a through hole that is provided at a site (for example, the drive rod 72 or the like) other than the diaphragm, or a tube or pipe or the like that is connected between the housing main body 60a and the cap 60b outside the actuator.

Further, according to the embodiments a configuration is adopted in which the vent hole 76 and the reed valve 78 or 92 are provided in the valve actuators 30 and 90, and the reed valve 78 or 92 is opened by pressure release control. However, the present invention does not necessarily require a structure such as a communication portion or a pressure release valve. More specifically, according to the present invention, a configuration may be adopted in which, without providing these structures, for example, a pressure that is supplied to a pressure chamber from a pressure source is decreased by pressure release means (pressure release control).

According to the embodiments a configuration is adopted which uses the air intake passage 14 and the mechanical negative pressure pump 84 as pressure sources. However, a pressure source of the present invention is not limited thereto and, for example, a configuration may be adopted which uses an electrically-driven pump or the exhaust passage 16 as a pressure source.

Furthermore, according to the embodiments a configuration is adopted in which the pressure supplied to the valve actuators 30 and 90 is controlled by the pressure regulating valve 86 and the switching valve 94. However, the present invention is not limited thereto and, for example, a variable type pump apparatus that allows a generated pressure to be changed by the ECU without using a pressure regulating valve or the like may be employed, and the differential pressure generating means may be constituted by the pump apparatus.

In addition, according to the embodiments a case is described in which the WGV 28 is taken as an example of a movable mechanism that is driven by the valve actuator 30 or 90. However, the present invention is not limited thereto, and the present invention is applicable to an arbitrary movable mechanism that is mounted in the internal combustion engine and driven by an actuator.

### Description of Reference Numerals

10 engine (internal combustion engine), 12 cylinder, 14 air intake passage (pressure source, differential pressure generating means), 16 exhaust passage, 18 throttle valve, 20 supercharger, 22 turbine, 24 compressor, 26 bypass passage, 28 waste gate valve (movable mechanism), 30,90 valve actuator (actuator), 32 link mechanism, 50 ECU, 60 housing, 62 diaphragm, 64 high pressure chamber (pressure chamber), 66 low pressure chamber (pressure chamber), 72 drive rod, 74 return spring, 76 vent hole (communication portion), 78 reed valve (pressure release valve), 80,82 pressure pipe, 84 negative pressure pump (pressure source, differential pressure generating means), 86 pressure regulating valve (differential pressure generating means), 94 switching valve (pressure regulating valve, differential pressure generating means),t temperature, T1 pressure release temperature

## Claims

1. An internal combustion engine control apparatus, comprising:
a movable mechanism provided in an internal combustion engine;
a diaphragm-type actuator in which, by disposing a flexible diaphragm inside a housing, a pressure chamber is defined on at least one side of the diaphragm, wherein the actuator drives the movable mechanism by allowing the diaphragm to bend and deform in accordance with a differential pressure that is generated between one side and another side of the diaphragm;
differential pressure generating means capable of generating the differential pressure;
actuator control means that controls an operating state of the actuator by changing the differential pressure by means of the differential pressure generating means based on operating information of the internal combustion engine;
temperature acquiring means that acquires a temperature of the actuator; and
pressure release means that releases a pressure of the pressure chamber when a temperature of the actuator exceeds a predetermined pressure release temperature.

2. The internal combustion engine control apparatus according to claim 1, wherein:
the actuator comprises a high pressure chamber and a low pressure chamber that are defined as the pressure chamber on one side and another side of the diaphragm, respectively; and
the pressure release means is configured to release pressure from either one of the high pressure chamber and the low pressure chamber to the other of the high pressure chamber and the low pressure chamber.

3. The internal combustion engine control apparatus according to claim 2, comprising:
a communication portion that allows the high pressure chamber and the low pressure chamber to communicate with each other; and
a pressure release valve that is a normally-closed valve that opens and closes the communication portion, and that opens when a state of the differential pressure satisfies a predetermined valve opening condition;
wherein the pressure release means is configured so that, when a temperature of the actuator exceeds the pressure release temperature, the valve opening condition is realized by means of the differential pressure generating means and the pressure release valve is opened.

4. The internal combustion engine control apparatus according to claim 3, wherein:
the pressure release valve comprises a reed valve that is provided at a position that covers the communication portion from the low pressure chamber side, and that opens when a differential pressure in a forward direction that presses the diaphragm from the high pressure chamber side becomes equal to or greater than a predetermined valve opening pressure;
when activating the actuator, the actuator control means maintains a pressure value of the differential pressure in a forward direction at a value that is less than the valve opening pressure while generating the differential pressure; and
the pressure release means is configured to increase the differential pressure in a forward direction to a pressure that is greater than or equal to the valve opening pressure.

5. The internal combustion engine control apparatus according to claim 3, wherein:
the pressure release valve comprises a reed valve that is provided at a position that covers the communication portion from the high pressure chamber side, and that opens when a differential pressure in a backward direction that presses the diaphragm from the low pressure chamber side is generated;
when activating the actuator, the actuator control means causes a differential pressure in a forward direction to be generated that presses the diaphragm from the high pressure chamber side; and
the pressure release means is configured to generate the differential pressure in a backward direction.

6. The internal combustion engine control apparatus according to any one of claims 2 to 5, wherein the differential pressure generating means comprises:
two pressure sources that supply pressure to the high pressure chamber and the low pressure chamber, respectively; and
a pressure regulating valve that regulates a pressure that is supplied to at least one of the high pressure chamber and the low pressure chamber.

7. The internal combustion engine control apparatus according to any one of claims 1 to 6, further comprising drive time release inhibiting means that inhibits operation of the pressure release means when a vehicle is moving.

8. The internal combustion engine control apparatus according to any one of claims 1 to 7, further comprising acceleration time release inhibiting means that inhibits operation of the pressure release means at a time of acceleration of the internal combustion engine.

9. The internal combustion engine control apparatus according to any one of claims 1 to 8, wherein the temperature acquiring means is configured to estimate a temperature of the actuator based on
operating information of the internal combustion engine.

10. The internal combustion engine control apparatus according to any one of claims 1 to 9, further comprising:
a supercharger that supercharges intake air utilizing an exhaust pressure;
wherein the movable mechanism is a waste gate valve that adjusts a boost pressure produced by the supercharger.
